(19) **Europäisches Patentamt**
**European Patent Office**
**Office européen des brevets**

(11) **EP 3 652 429 B1**

(12) **FASCICULE DE BREVET EUROPEEN**

(45) Date de publication et mention
de la délivrance du brevet:
**17.02.2021 Bulletin 2021/07**

(21) Numéro de dépôt: **18749042.0**

(22) Date de dépôt: **12.07.2018**

(51) Int Cl.:
**F03B 17/06** (2006.01)

(86) Numéro de dépôt international:
**PCT/FR2018/051767**

(87) Numéro de publication internationale:
**WO 2019/012233 (17.01.2019 Gazette 2019/03)**

(54) **CENTRALE HYDROELECTRIQUE**

WASSERKRAFTWERK

HYDROELECTRIC POWER PLANT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.07.2017 FR 1756637**

(43) Date de publication de la demande:
**20.05.2020 Bulletin 2020/21**

(73) Titulaire: **Institut Polytechnique de Grenoble
38500 Grenoble (FR)**

(72) Inventeurs:
• **MAITRE, Thierry
38330 Saint Ismier (FR)**

• **BERNARD, Kenny
38100 Grenoble (FR)**
• **FILIPUTTI, Hugues
38650 Monestier de Clermont (FR)**

(74) Mandataire: **Cabinet Beaumont
4, Place Robert Schuman
B.P. 1529
38025 Grenoble Cedex 1 (FR)**

(56) Documents cités:
**WO-A1-2012/159152 WO-A1-2013/043057
US-A- 328 496 US-A- 787 562
US-A- 1 522 820**

EP 3 652 429 B1

**Description**

Domaine

La présente demande concerne une centrale hydroélectrique.

Exposé de l'art antérieur

Il existe des centrales hydroélectriques qui utilisent l'énergie cinétique naturelle des cours d'eau, appelées également hydroliennes, qui demandent peu de travaux de génie civil et produisent une électricité qui varie avec le débit du cours d'eau. Elles présentent l'avantage d'entraîner un coût de fabrication et d'installation réduit par rapport à une centrale hydroélectrique associée à un barrage et ne perturbent pas la vie propre du cours d'eau. De plus, la conversion mécano-électrique des hydroliennes peut être réalisées hors de l'eau. Il peut être prévu que les hydroliennes flottent sur le cours d'eau de façon à ne pas réaliser de fondations et à s'adapter à la variation naturelle du niveau d'eau.

Une hydrolienne comprend généralement des pales, également appelées voiles, qui entraînent en rotation un arbre lorsqu'elles sont immergées dans le cours d'eau. Le déplacement des pales peut être dû principalement à des forces de portance ou à des forces de traînée. La centrale est dite à flux axial lorsque le courant est parallèle à l'axe de rotation de l'arbre et à flux transverse lorsque le courant est perpendiculaire à l'axe de rotation de l'arbre.

Toutefois, les rendements des hydroliennes existantes peuvent être faibles, en particulier celles à flux transverse. En outre, les structures des hydroliennes existantes peuvent être complexes, ce qui entraîne des coûts de fabrication, d'installation et de maintenance élevés. En outre, pour certaines applications, les hydroliennes existantes, en particulier celles à flux axial, peuvent avoir un encombrement excessif, que ce soit en hauteur ou en largeur, et/ou être peu modulaires ce qui n'est pas souhaitable. Enfin les hydroliennes ont une vitesse de rotation qui diminue lorsque leur taille augmente ce qui augmente le couple à transmettre et complique la génération électrique.

Le document US 1 522 820 décrit une centrale hydroélectrique.

Résumé

Un objet d'un mode de réalisation est de pallier tout ou partie des inconvénients des hydroliennes décrites précédemment.

Un autre objet d'un mode de réalisation est d'augmenter le rendement de l'hydrolienne.

Un autre objet d'un mode de réalisation est que l'hydrolienne ait une structure simple.

Un autre objet d'un mode de réalisation est de réduire l'encombrement de l'hydrolienne.

Ainsi, un mode de réalisation prévoit une centrale hydroélectrique pour cours d'eau comprenant un convertisseur électromécanique et une turbine adaptée à entraîner le convertisseur électromécanique, la turbine comprenant deux supports verticaux et parallèles à l'écoulement du cours d'eau, un flotteur relié à chaque support, et, entre les supports, des pales motrices mues par les forces hydrodynamiques de portance, liées à chaque extrémité à un organe de transmission comprenant une chaîne ou une courroie formant une boucle fermée, la turbine comprenant en outre des roues entraînées par l'organe de transmission et montées sur les supports, chaque pale comprenant un bord d'attaque et un bord de fuite, la centrale hydroélectrique comprenant au moins des première, deuxième et troisième zones de parcours dans lesquelles chaque organe de transmission s'étend de façon rectiligne, les bords d'attaque des pales étant disposés de façon horizontale à 5° près au moins dans les première et deuxième zones de parcours, les pales étant complètement immergées au moins sur une partie des première et deuxième zones de parcours, chaque support comprenant des guides et chaque pale comprend des éléments adaptés à venir en butée contre les guide.

Selon un mode de réalisation, chaque pale est en outre reliée à chaque extrémité à l'un des supports.

Selon un mode de réalisation, dans un plan vertical parallèle aux supports, le bord d'attaque de chaque pale est adapté à se déplacer de façon rectiligne dans chacune des première, deuxième et troisième zones de parcours.

Selon un mode de réalisation, les pales sont émergées en totalité dans la troisième zone de parcours.

Selon un mode de réalisation, les pales se déplacent sensiblement horizontalement à 5° près dans la troisième zone de parcours.

Selon un mode de réalisation, chaque pale est montée libre en rotation par rapport aux organes de transmission autour d'un axe situé dans la moitié de la pale du côté du bord d'attaque de la pale.

Selon un mode de réalisation, pour chaque pale, les éléments sont fixés à la pale dans la moitié de la pale du côté du bord de fuite de la pale.

Selon un mode de réalisation, les guides de chaque support comprennent un premier guide rectiligne dans la première zone de parcours, en aval, selon le sens d'écoulement du cours d'eau, de l'organe de transmission dans la première zone de parcours et un deuxième guide rectiligne dans la deuxième zone de parcours, en aval, selon le sens d'écoulement du cours d'eau, de l'organe de transmission dans la deuxième zone de parcours.

Selon un mode de réalisation, les pales sont adaptées, sous l'action des forces hydrodynamiques, à se cambrer vers l'aval dans les première et deuxième zones de parcours.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en perspective, partielle et schématique, d'un mode de réalisation d'une hydrolienne ;
les figures 2 et 3 sont respectivement une vue en perspective et une vue de dessus, partielles et schématiques, d'un mode de réalisation de la turbine de l'hydrolienne représentée en figure 1 ;
les figures 4 et 5 sont respectivement une vue en perspective et une vue de côté de certains éléments de la turbine représentée sur les figures 2 et 3 ;
la figure 6 est une vue de dessous, partielle et schématique, de certains éléments de la turbine représentée sur les figures 2 et 3 ;
les figures 7 et 8 sont respectivement une vue en perspective et une vue de côté partielles et schématiques de l'hydrolienne représentée sur la figure 1 illustrant son fonctionnement ;
les figures 9 à 12 sont des vues de côté agrandies, partielles et schématiques, de quatre parties de l'hydrolienne de la figure 1 ;
la figure 13 est une vue analogue à la figure 7 d'un autre mode de réalisation d'une hydrolienne ;
la figure 14 est une vue analogue à la figure 5 d'un autre mode de réalisation d'une hydrolienne comprenant un système de débrayage des pales ;
les figures 15 à 18 et 20 sont des vues en coupe, partielles et schématiques, d'une partie de l'hydrolienne de la figure 14 à des étapes successives d'une opération de débrayage d'une pale et la figure 19 est une vue en perspective de la partie de l'hydrolienne représentée en figure 18 ;
les figures 21 à 23 sont des vues en coupe, partielles et schématiques, d'une partie de l'hydrolienne de la figure 14 à des étapes successives d'une opération d'embrayage d'une pale ;
la figure 24 est une vue en coupe, partielle et schématique, représentant deux pales en position débrayée ;
les figures 25 et 26 sont des vues analogues à la figure 14 d'une variante de réalisation de l'hydrolienne représentée en figure 14 ;
la figure 27 est une vue en coupe, partielle et schématique, d'une variante de réalisation du système de débrayage de l'hydrolienne de la figure 14 ; et
les figures 28 et 29 sont des vues en coupe, partielles et schématiques, d'un autre mode de réalisation d'une pale à deux positions différentes de la pale.

Description détaillée

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à une centrale hydroélectrique dans une position normale d'utilisation. Sauf précision contraire, les expressions "approximativement", "sensiblement", "environ" et "de l'ordre de" signifient à 10 % près, de préférence à 5 % près. En relation avec des directions ou des angles, les expressions "approximativement", "sensiblement", "environ" et "de l'ordre de" signifient à 10° près, de préférence à 5° près. De plus, seuls les éléments nécessaires à la compréhension de l'invention sont décrits et représentés sur les figures. En particulier, la structure et le fonctionnement des convertisseurs électromécaniques de centrales hydroélectriques ainsi que les organes de flottaisons sont bien connus de l'homme du métier et ne sont pas décrits en détail. Dans la suite de la description, les adjectifs "amont" et "aval" sont utilisés pour distinguer des éléments d'une hydrolienne immergée au moins partiellement dans un cours d'eau par rapport au sens d'écoulement du cours d'eau.

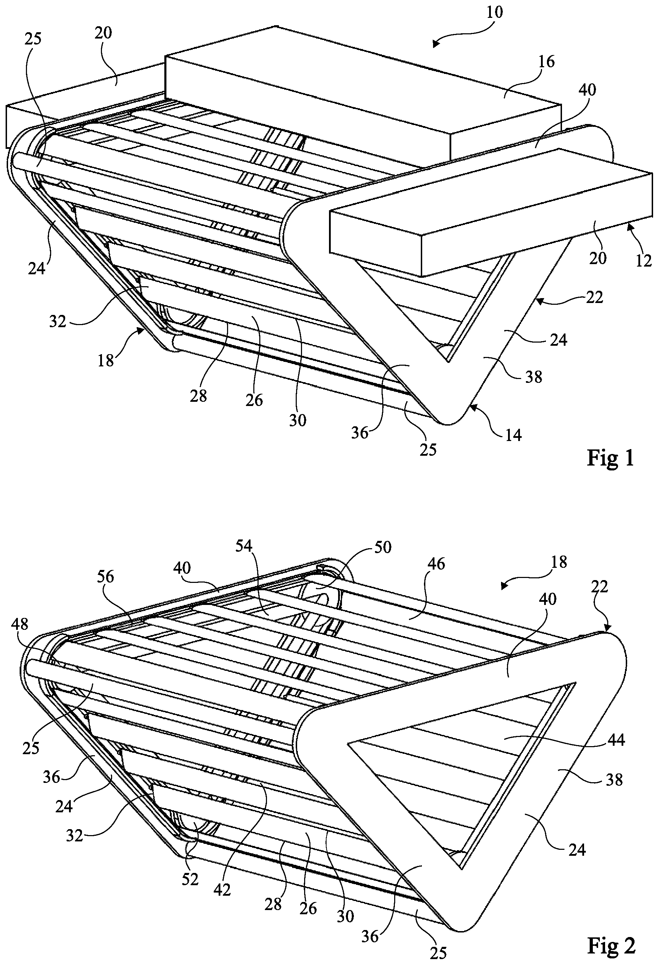

La figure 1 est une vue en perspective, partielle et schématique, d'un mode de réalisation d'une hydrolienne 10. L'hydrolienne 10 est adaptée à fournir une puissance électrique qui peut varier de 1 kW à 100 kW.

L'hydrolienne 10 comprend un organe de flottaison 12 et une turbomachine 14. La turbomachine 14 comprend un convertisseur électromécanique 16 entraîné par une turbine 18. Selon un mode de réalisation, l'organe de flottaison 12 comprend deux flotteurs 20 disposés de part et d'autre de la turbine 18. Les flotteurs 20 sont représentés de façon schématique par des parallélépipèdes en figure 1. Le convertisseur électromécanique 16 peut être relié au réseau électrique.

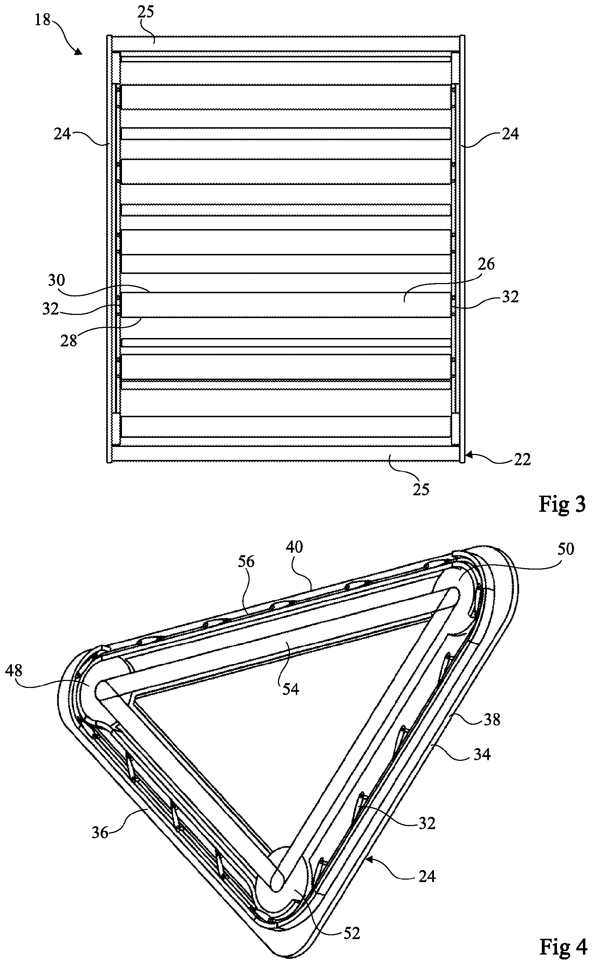

Les figures 2 et 3 sont respectivement une vue en perspective et une vue de dessus d'un mode de réalisation de la turbine 18.

La turbine 18 comprend un bâti 22 qui, selon un mode de réalisation, comprend deux supports 24 reliés par des traverses 25. La turbine 18 comprend, entre les deux supports 24, N pales motrices 26, où N est un nombre entier qui varie, par exemple, de 8 à 32. Selon un mode de réalisation, chaque pale motrice 26 est une pale droite orientée sensiblement horizontalement. Chaque pale 26 comprend un bord d'attaque 28, un bord de fuite effilé 30, et deux extrémités latérales 32 opposées.

Chaque pale 26 peut avoir, dans un plan vertical, la forme d'un profil d'aile, par exemple un profil biconvexe symétrique ou dissymétrique, un profil plan creux, ou un profil à double courbure. De préférence, l'épaisseur relative du profil est inférieure ou égale à 18 %. De préférence, pour chaque pale 26, le profil de la pale 26 est sensiblement constant sur la majeure partie de l'envergure de la pale 26.

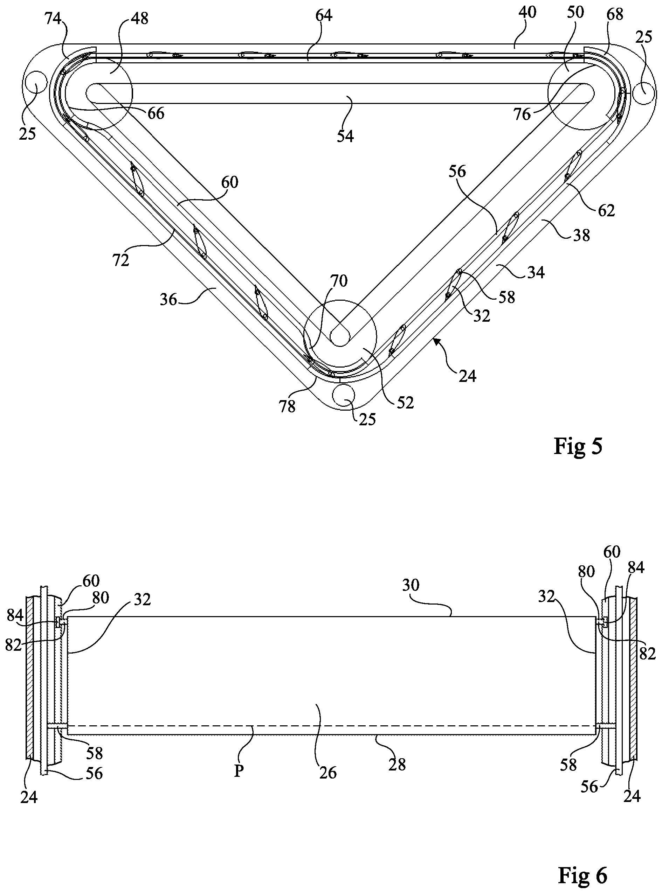

Les figures 4 et 5 sont respectivement une vue en perspective et une vue de face d'un mode de réalisation du support 24. Les extrémités latérales 32 des pales 26 situées du côté du support 24 sont en outre représentées sur les figures 4 et 5.

Dans le présent mode de réalisation, chaque support 24 comprend une plaque 34 comprenant trois branches 36, 38, 40 reliées entre elles aux extrémités selon un triangle. Chaque plaque 34 est disposée dans le cours d'eau selon un plan sensiblement vertical et parallèle à la direction d'écoulement du cours d'eau.

Les branches se répartissent selon :

- une branche amont 36 destinée en fonctionnement à être au moins partiellement immergée dans le cours d'eau le plus en amont et s'étendant selon une direction inclinée par rapport à la direction horizontale ;
- une branche aval 38 destinée en fonctionnement à être au moins partiellement immergée dans le cours d'eau le plus en aval et s'étendant selon une direction inclinée par rapport à la direction horizontale ; et
- une branche supérieure 40 pouvant en fonctionnement être immergée dans le cours d'eau ou maintenue émergée et s'étendant selon une direction sensiblement horizontale.

Comme cela est représentée en figure 2, les branches amont 36 des supports 24 délimitent entre elles une zone de parcours amont 42. Les branches aval 38 des supports 24 délimitent entre elles une zone de parcours aval 44. Les branches supérieures 40 des supports 24 délimitent entre elles une zone de parcours supérieure 46.

A chaque coin de la plaque 34, le support 24 comprend une roue montée libre en rotation sur un arbre, non visible sur les figures, fixé à la plaque 34. Dans le présent mode de réalisation, chaque support 24 comprend trois roues 48, 50, 52, plus précisément une roue supérieure avant 48 située au coin le plus à l'amont de la plaque 34, une roue supérieure arrière 50 située au coin le plus à l'aval de la plaque 34 et une roue inférieure 52 située au coin le plus bas de la plaque 34. Les axes de rotation des roues 48, 50, 52 sont sensiblement parallèles et horizontaux, et pour chaque support 24, les roues 48, 50, 52 reliées au support 24 sont sensiblement situées dans un même plan. Chaque support 24 peut en outre comprendre un renfort 54 situé du côté des roues 48, 50, 52 opposé à la plaque 24 et relié aux arbres autour desquels tournent les roues 48, 50, 52. Selon un mode de réalisation, les axes de rotation des roues supérieures avant 48 sont confondus, les axes de rotation des roues supérieures arrière 50 sont confondus et les axes de rotation des roues inférieures 52 sont confondus. Une paire, deux paires ou trois des paires de roues 48, 50, et 52 peuvent comprendre un arbre de rotation commun, non représenté, traversant la turbine. Au moins l'une des roues 48, 50, 52 est reliée au convertisseur électromécanique 16 par un mécanisme non représenté et entraîne le convertisseur électromécanique 16 lorsqu'elle est mise en rotation.

Chaque support 24 comprend une chaîne 56, représentée de façon schématique sur les figures, s'étendant autour des trois roues 48, 50, 52 et adaptée à entraîner en rotation les roues 48, 50, 52 lorsqu'elle est déplacée. A titre d'exemple, chaque chaîne 56 peut comprendre une succession de maillons, non visibles sur les figures, qui sont articulés entre eux, les maillons étant adaptés à coopérer avec le bord externe de chaque roue 48, 50, 52. A titre de variante, chaque chaîne 56 peut être remplacée par n'importe quel type d'organe de transmission, par exemple une courroie notamment une courroie plate, une courroie crantée, une courroie trapézoïdale, une courroie striée ou une courroie ronde (également appelée câble).

La figure 6 représente une vue de dessous de l'une des pales 26 de la zone de parcours amont 42 et des chaînes 56 situées de part et d'autre de la pale 26. Chaque pale 26 est reliée aux chaînes 56 à ses extrémités latérales 32. Selon un mode de réalisation, chaque pale 26 est reliée à chaque chaîne 56 par un élément de liaison 58. Les éléments de liaison 58 permettent une rotation de la pale 26 par rapport aux chaînes 56 autour d'un axe de rotation P sensiblement horizontal. Selon un mode de réalisation, l'axe de rotation P est situé dans la moitié de la pale 26 du côté du bord d'attaque 28, de préférence dans le quart de la pale 26 contenant le bord d'attaque.

En fonctionnement, la turbine 18 est immergée au moins partiellement dans un cours d'eau, les bords d'attaque 28 étant maintenus sensiblement horizontaux. Les pales 26 immergées dans le cours d'eau sont, sous l'action de forces de portance, adaptées à entraîner le déplacement des chaînes 56.

Comme cela est visible sur les figures 4 et 5, chaque support 24 comprend des guides qui se projettent au moins en partie depuis la plaque 34 du support 24 vers l'intérieur de la turbine 18. Chaque guide joue le rôle d'une butée qui limite le mouvement de rotation de chaque pale 26 par rapport aux chaînes 56.

Selon un mode de réalisation, chaque support 24 comprend :

- un guide principal amont 60 qui s'étend de façon sensiblement rectiligne sur la branche amont 36 en aval de la chaîne 56 ;
- un guide principal aval 62 qui s'étend de façon sensiblement rectiligne sur la branche aval 38 en aval de la chaîne 56 ;
- un guide supérieur 64 qui s'étend de façon sensiblement rectiligne sur la branche supérieure 40 sous la chaîne 56 ;
- un guide principal de transition supérieure amont 66 reliant l'extrémité supérieure du guide principal amont 60 et l'extrémité amont du guide supérieur 64, comprenant notamment une portion cylindrique recouvrant la roue supérieure avant 48, dont l'axe correspond à l'axe de rotation de la roue supérieure avant 48 et de diamètre inférieur au diamètre du cercle suivi par la chaîne 56 lorsqu'elle est guidée par la roue supérieure avant 48 ;
- un guide principal de transition supérieure aval 68 prolongeant l'extrémité supérieure du guide aval 62, comprenant notamment une portion cylindrique recouvrant la roue supérieure arrière 50, dont l'axe correspond à l'axe de rotation de la roue supérieure arrière 50 et de diamètre supérieur au diamètre du cercle suivi par la chaîne 56 lorsqu'elle est guidée par la roue supérieure arrière 50 ; et
- un guide principal de transition inférieure 70 prolongeant l'extrémité inférieure du guide principal amont 60, comprenant notamment une portion cylindrique recouvrant la roue inférieure 52, dont l'axe correspond à l'axe de rotation de la roue inférieure 52 et de diamètre inférieur au diamètre du cercle suivi par la chaîne 56 lorsqu'elle est guidée par la roue inférieure 52.

Selon un mode de réalisation, chaque support 24 peut en outre comprendre :

- un guide secondaire amont 72 qui s'étend de façon sensiblement rectiligne sur la branche amont 36 en amont de la chaîne 56 ;
- un guide secondaire de transition supérieure amont 74 prolongeant l'extrémité supérieure du guide secondaire amont 72, comprenant notamment une portion cylindrique dont l'axe correspond à l'axe de rotation de la roue supérieure avant 48 et de diamètre supérieur au diamètre du cercle suivi par la chaîne 56 lorsqu'elle est guidée par la roue supérieure avant 48 ;
- un guide secondaire de transition supérieure aval 76 prolongeant l'extrémité arrière du guide supérieur 64 et comprenant notamment une portion cylindrique dont l'axe correspond à l'axe de rotation de la roue supérieure arrière 50 et de diamètre inférieur au diamètre du cercle suivi par la chaîne 56 lorsqu'elle est guidée par la roue supérieure arrière 50 ; et
- un guide secondaire de transition inférieure 78 reliant l'extrémité inférieure du guide secondaire amont 72 et l'extrémité inférieure du guide principal aval 62, comprenant notamment une portion cylindrique dont l'axe correspond à l'axe de rotation de la roue inférieure 52 et de diamètre supérieur au diamètre du cercle suivi par la chaîne 56 lorsqu'elle est guidée par la roue inférieure 52.

Comme cela est représenté en figure 6, selon un mode de réalisation, la turbine 18 comprend pour chaque pale 26 des éléments d'appui 80 fixés aux extrémités 32 de la pale 26, chaque élément d'appui 80 étant adapté à venir en contact avec l'un des guides 60, 62, 64, 66, 68, 70, 72, 74, 76 et 78 au cours du déplacement de la pale 26. Selon un mode de réalisation, chaque élément d'appui 80 comprend un ergot 82 se projetant depuis une extrémité latérale 32 de la pale 26, de préférence dans le quart contenant le bord de fuite 30 du profil de la pale 26. Chaque ergot 82 est muni d'un galet 84 adapté à tourner et/ou à glisser contre l'un des guides 60, 62, 64, 66, 68, 70, 72, 74, 76 et 78 au cours du déplacement de la pale 26.

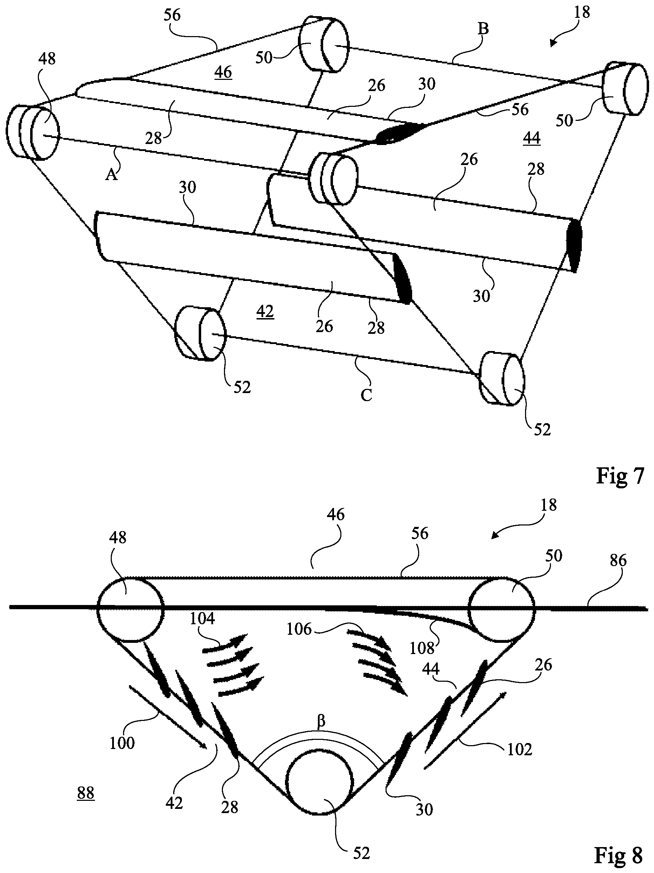

Les figures 7 et 8 sont respectivement une vue en perspective et une vue de côté schématiques de l'hydrolienne 10 illustrant son fonctionnement. Sur les figures 7 et 8, les seuls éléments de l'hydrolienne 10 qui sont représentés de façon schématique sont certaines pales 26 (trois en figure 7 et six en figure 8), les roues 48, 50 et 52, les chaînes 56 et, sur la figure 7, les axes de rotation A, B et C respectivement des roues supérieures avant 48, des roues supérieures arrière 50 et des roues inférieures 52. En outre, en figure 8, on a représenté par un trait 86 la surface libre du cours d'eau 88 dans lequel l'hydrolienne 10 est immergée partiellement. Comme cela apparaît sur la figure 8, dans le présent mode de réalisation, la zone de parcours supérieure 46 de la turbine 18 n'est pas immergée dans le cours d'eau 88.

Les pales 26 sont disposées de façon que, lorsque les pales 26 sont situées dans la zone de parcours amont 42, le bord d'attaque 28 de la pale 26 est plus bas que le bord de fuite 30 et que, lorsque les pales 26 sont situées dans la zone de parcours aval 44, le bord d'attaque 28 de la pale 26 est plus haut que le bord de fuite 30. Les forces de portance dues à l'écoulement 88 qui s'exercent sur les pales 26 dans la zone de parcours amont 42 tendent à faire descendre les pales 26 vers le fond du cours d'eau selon la direction indiquée par la flèche 100. Les forces de portance dues à l'écoulement 88 qui s'exercent sur les pales 26 dans la zone de parcours aval 44 tendent à faire remonter les pales 26 à la surface du cours d'eau 88 selon la direction indiquée par la flèche 102.

On obtient donc un déplacement global de chaque chaîne 56 selon le sens inverse des aiguilles d'une montre en figure 8. Le déplacement des chaines 56 entraîne la mise en rotation des roues 48, 50, 52 et l'entraînement du convertisseur électromécanique 16. Selon un mode de réalisation, la vitesse de déplacement de chaque chaîne 56 est supérieure à la vitesse moyenne de l'écoulement 88 dans la zone de parcours amont 42, de préférence comprise entre 1 à 2 fois la vitesse moyenne de l'écoulement 88 dans la zone de parcours amont 42.

Le coefficient de puissance K, qui correspond au rapport entre la puissance mécanique récupérée par la chaine (sans tenir compte du rendement mécanique de transmission pales-chaîne) et l'énergie cinétique pouvant être récupérée par le maître-couple de l'hydrolienne 10, est donné par la relation (1) suivante :

$$K = P_m \; / \; (0,5 * \rho * S * V^3) \tag{1}$$

où $P_m$ est la puissance mécanique récupérée par la chaîne 56, S est le maître-couple de l'hydrolienne 10, $\rho$ est la masse volumique de l'eau et V est la vitesse moyenne de l'écoulement 88 atteignant la zone de parcours amont 42. Le maître-couple S de l'hydrolienne 10 est sensiblement égal à deux fois l'aire du rectangle vertical dont la largeur est sensiblement égale à l'envergure des pales 26 et dont la hauteur, mesurée verticalement, est égale à la profondeur immergée de l'hydrolienne 10. Les inventeurs ont mis en évidence par simulation qu'un coefficient de puissance K variant de 0,43 à 0,51 est obtenu lorsque la vitesse de la chaîne 56 varie de 1 à 2 fois la vitesse de l'écoulement amont 88.

De façon avantageuse, le bord d'attaque 28 de chaque pale 26 dans la zone de parcours amont 42 et dans la zone de parcours aval 44 est sensiblement horizontal. Etant donné que dans les cours d'eau, le gradient de vitesses de l'écoulement est essentiellement vertical, la disposition horizontale des bords d'attaque 28 des pales 26 permet que, pour chaque pale 26 dans la zone de parcours amont 42 et dans la zone de parcours aval 44, l'écoulement vu par la pale 26 a une vitesse sensiblement constante sur toute l'envergure de la pale 26, ce qui augmente ses performances hydrodynamiques. Les forces appliquées sur la pale 26 sont donc sensiblement constantes sur toute l'envergure de la pale 26.

De façon avantageuse, le déplacement des pales 26 sur la zone de parcours supérieure 46 est réalisée hors de l'eau. Les pales 26 sont alors seulement soumises à la traînée aérodynamique qui est nettement inférieure à la traînée hydrodynamique. Il n'y a alors, de façon avantageuse, sensiblement pas de perte de puissance due au parcours des pales 26 dans la zone de parcours supérieure 46. En outre, de façon avantageuse, il n'y a pas à prévoir de carénages protégeant contre l'écoulement 88 les pales 26 situées dans la zone de parcours supérieure 46. La structure de l'hydrolienne 10 est ainsi simplifiée.

La surface libre 86 de l'écoulement 88 crée un effet de confinement naturel qui réduit le développement de composantes de vitesse verticales de l'écoulement 88 à l'aval des pales 26 situées dans la zone de parcours amont 42, ce qui est illustré en figure 8 par les flèches 104 et 106. De ce fait, la vitesse de l'écoulement 88 atteignant les pales 26 dans la zone de parcours aval 44 est sensiblement horizontale.

Selon un mode de réalisation, un élément de redirection 108 peut être ajouté pour augmenter la vitesse du fluide atteignant les pales 26 dans la zone de parcours aval 44 et par conséquent augmenter la puissance développée par les pales 26 dans la zone de parcours aval 44.

Les dimensions de l'hydrolienne 10 sont adaptées à l'application envisagée. Selon un mode de réalisation, l'angle β définissant le virage de la chaine autour de la roue inférieure 52 est compris entre 60° et 120°. Selon un mode de réalisation, l'envergure E de chaque pale 26 est comprise entre 1 m et 8 m. Selon un mode de réalisation, la corde Co de chaque pale 26 est comprise entre E/5 et E/10. Selon un mode de réalisation, le diamètre de chaque roue 48, 50, 52 est compris entre Co et 4*Co. Selon un mode de réalisation, la profondeur immergée de l'hydrolienne est comprise entre 0,5 m et 3 m, la limitation à 3 m provenant de la rareté des veines d'eau permettant de plus grandes profondeurs d'immersion.

Selon un autre mode de réalisation, la zone de parcours supérieure 46 est immergée dans l'écoulement 88 à proximité de la surface libre 86 de l'écoulement 88, les chaînes 56 étant orientées sensiblement de façon horizontale dans la zone de parcours supérieure 46. Dans ce cas, dans la zone de parcours supérieure 46, les pales 26 remontent le courant. L'effet de confinement dû à la surface libre 86 de l'eau fait que l'écoulement vu par les pales 26 dans la zone de parcours supérieure 46 est sensiblement horizontal. Pour réduire la traînée hydrodynamique de l'écoulement 88 sur les pales 26 dans la zone de parcours supérieure 46, les pales 26 sont sensiblement maintenues horizontales dans la zone de parcours supérieure 46. Cet effet d'auto-confinement permet de s'affranchir de carénage pour protéger la remontée du courant des pales 26.

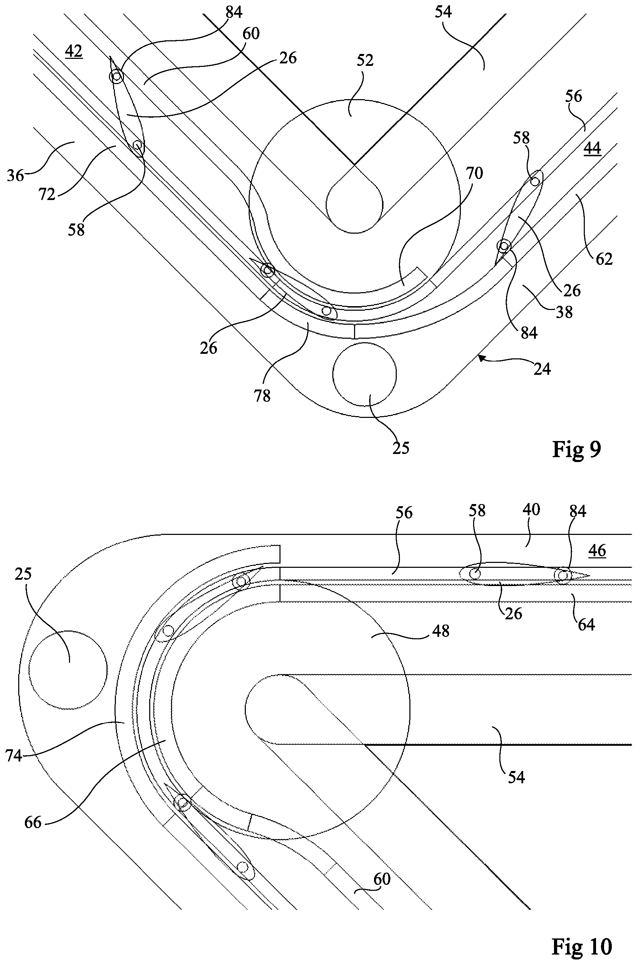

Les figures 9 à 12 sont des vues agrandies, partielles et schématiques, de quatre parties différentes de l'hydrolienne de la figure 5 respectivement au niveau de la roue inférieure 52, de la roue supérieure amont 48, de la zone de parcours amont 42 et de la roue supérieure aval 50.

Comme cela apparaît sur la figure 9, dans la zone de parcours amont 42, l'écoulement 88 tend à faire pivoter les pales 26 autour de l'axe de rotation de l'élément de liaison 58 situé dans la moitié avant de la pale 26, de façon que le galet 84 situé dans la partie arrière de la pale 26 vienne en butée contre le guide principal amont 60. Ceci fixe l'angle de calage de la pale 26 par rapport à la chaîne 56 dans la zone de parcours amont 42, c'est-à-dire l'angle entre la corde de la pale 26 et la direction de la chaîne 56 dans la zone de parcours amont 42. Ceci fixe en outre l'angle d'incidence de l'écoulement sur la pale 26 correspondant, dans un plan vertical parallèle aux supports 24, à l'angle entre la corde de la pale et la direction de l'écoulement relatif vu par la pale. Selon un mode de réalisation, l'incidence de chaque pale 26 dans la zone de parcours amont 42 est sensiblement constante quelle que soit la position de la pale 26 dans la zone de parcours amont 42. Le guide secondaire amont 72 forme une butée de façon à éviter que, dans la zone de parcours amont 42, la pale 26 ne pivote dans le sens inverse des aiguilles d'une montre en figure 9, par exemple lors d'une opération d'installation ou de maintenance au cours de laquelle l'hydrolienne 10 se trouve hors de l'écoulement.

Comme cela apparaît sur la figure 9, dans la zone de parcours aval 44, l'écoulement 88 tend à faire pivoter les pales 26 autour de l'axe de rotation de l'élément de liaison 58 de façon que le galet 84 vienne en butée contre le guide principal aval 62. Ceci fixe l'angle de calage de la pale 26 par rapport à la chaîne 56 dans la zone de parcours aval 44 et l'incidence de la pale 26 dans la zone de parcours aval 44. Selon un mode de réalisation, l'incidence de chaque pale 26 est sensiblement constante dans la zone de parcours aval 44 quelle que soit la position de la pale 26 dans la zone de parcours aval 44.

Comme cela apparaît sur la figure 9, lors de la transition entre la zone de parcours amont 42 et la zone de parcours aval 44, au cours de la progression de la pale 26 autour de la roue inférieure 52, l'écoulement 88 tend à faire pivoter les pales 26 autour de l'axe de rotation de l'élément de liaison 58 de façon que le galet 84 vienne en butée dans un premier temps contre le guide principal de transition inférieure 70 puis contre le guide secondaire de transition inférieure 78, ce qui amène la pale 26 de l'angle de calage de la pale dans la zone de parcours amont 42 jusqu'à l'angle de calage de la pale dans la zone de parcours aval 44. De cette façon, le bord de fuite de la pale 26 est guidé par le guide principal de transition inférieure 70 ou le guide secondaire de transition inférieure 78 tout au long du déplacement de la pale 26 autour de la roue inférieure 52. Ceci permet à la pale, de façon avantageuse, de récupérer de la puissance tout au long du virage de la pale 26 autour de la roue inférieure 52.

Comme cela apparaît sur la figure 10, dans la zone de parcours supérieure 46, les pales 26 tendent par gravité, si elles sont émergées ou immergées mais plus denses que l'eau, à pivoter autour de l'axe de rotation de l'élément de liaison 58 de façon que le galet 84 vienne en butée contre le guide principal supérieur 64. Ceci fixe l'angle de calage de la pale 26 par rapport à la chaîne 56 dans la zone de parcours supérieure 46. Selon un mode de réalisation, la corde de chaque pale 26 dans la zone de parcours supérieure 46 est sensiblement horizontale quelle que soit la position de la pale 26 dans la zone de parcours supérieure 46. Si les pales 26 le long de la zone de parcours supérieure 46 sont immergées et moins denses que l'eau, la poussée d'Archimède tend à les faire pivoter autour de l'axe de rotation de l'élément de liaison 58 dans le sens inverse des aiguilles d'une montre. Dans ce cas, il peut être intéressant de prévoir un guide secondaire horizontal supérieur, non représenté, au-dessus de la chaîne 56 afin que le galet 84 vienne se placer en butée contre ce dernier, lorsque les pales sont arrêtées ou lorsqu'elles sont en mouvement mais que les forces de portance sont insuffisantes pour ramener les pales en position horizontale.

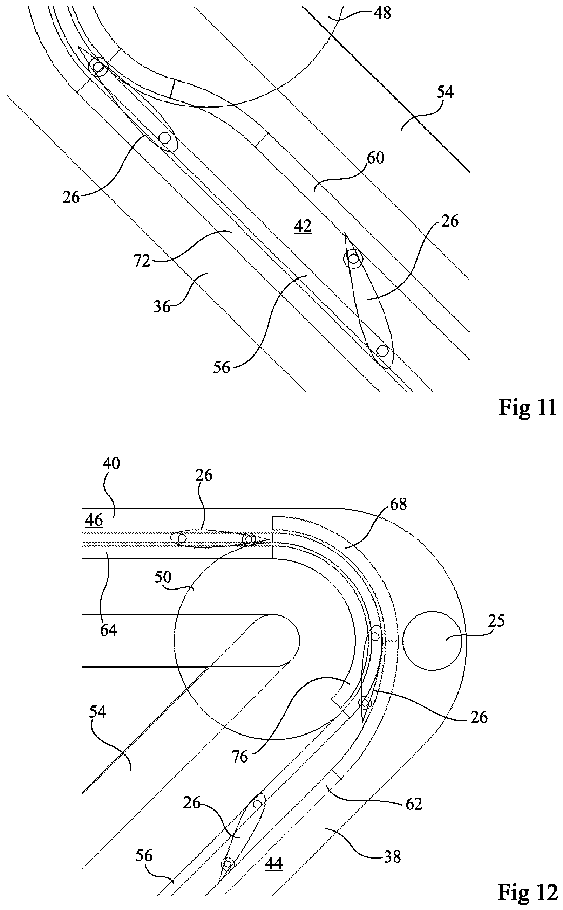

Comme cela apparaît sur les figures 10 et 11, lors de la transition entre la zone de parcours supérieure 46 et la zone de parcours amont 42, au cours de la progression de la pale 26 autour de la roue supérieure avant 52, le galet 84 est guidé par le guide principal de transition supérieure amont 66 ou le guide secondaire de transition supérieure amont 74 de façon à amener la pale 26 de l'angle de calage dans la zone de parcours supérieure 46 jusqu'à l'angle de calage dans la zone de parcours amont 42. Les deux guides 66 et 74 sont prévus dans la mesure où si l'écoulement 88 tend à amener le galet 84 en butée contre le guide principal de transition supérieure amont 66, à contrario les forces centrifuges tendent à mettre le galet 84 en butée contre le guide secondaire de transition supérieure amont 74. Dans le cas de pales émergées ou immergées plus denses que l'eau, les forces gravitaires tendent à amener le galet 84 en butée contre le guide principal de transition supérieure amont 66 en début de virage et contre le guide secondaire de transition supérieure amont 74 en fin de virage. Dans le cas de pales immergées moins denses que l'eau, les forces gravitaires tendent à amener le galet 84 en butée contre le guide secondaire de transition supérieure amont 74 en début de virage et contre le guide principal de transition supérieure amont 66 en fin de virage.

Comme cela apparaît sur la figure 12, le guide principal de transition supérieure aval 68 et le guide secondaire de transition supérieure aval 76 permettent d'amener la pale 26 de l'angle de calage dans la zone de parcours aval 44 jusqu'à l'angle de calage dans la zone de parcours supérieure 46. Au cours de la progression de la pale 26 autour de la roue supérieure arrière 50, l'écoulement 88 et la force centrifuge tendent à faire pivoter les pales 26 autour de l'axe de rotation de l'élément de liaison 58 dans le sens inverse des aiguilles d'une montre pour amener le galet 84 en buté contre le guide principal de transition supérieure aval 68. Dans le cas de pales émergées ou immergées plus denses que l'eau, les forces gravitaires tendent à amener le galet 84 en butée contre le guide secondaire de transition supérieure aval 76. Dans le cas de pales immergées moins denses que l'eau, les forces gravitaires tendent à amener le galet 84 en butée contre le guide principal de transition supérieure aval 68. Si les pales sont moins denses que l'eau, il peut être intéressant, du fait de la poussée d'Archimède, de prévoir un guide secondaire aval, non représenté, en amont de la chaîne 56 afin que le galet 84 vienne se placer en butée contre ce-dernier, lorsque les pales sont arrêtées.

Selon un mode de réalisation, l'angle d'incidence de l'écoulement sur la pale est, dans la zone de parcours amont 42, compris entre 4° et 10°, par exemple 7°, cet angle d'incidence dépendant du type de section de pale utilisé et du nombre de Reynolds de corde Re=V*Co/v, v désignant la viscosité cinématique de l'eau. Selon un mode de réalisation, l'angle d'incidence de l'écoulement sur la pale est, dans la zone de parcours aval 44, égal ou un peu inférieur à l'angle d'incidence de l'écoulement sur la pale dans la zone de parcours amont 42.

Dans les modes de réalisation décrits précédemment, chaque pale 26, dans la zone de parcours amont 42 et dans la zone de parcours aval 44 est reliée aux chaînes 56 dans la première moitié de la pale 26 et est reliée au guides 66 ou 68 dans la deuxième moitié de la pale 26. La traînée appliquée à la pale 26 est alors reprise par les chaînes 56 au bord d'attaque et par les guides 66 ou 68 au bord de fuite. Ceci permet, de façon avantageuse, d'augmenter la tenue mécanique en fatigue des chaînes 56 et des roues 48, 50 et 52 qui ne reprennent qu'une partie de la traînée de l'hydrolienne 10, l'autre partie étant reprise par les supports 24.

Dans les modes de réalisation décrits précédemment, les pales 26 ont une structure sensiblement rigide. Selon un autre mode de réalisation, les pales 26 ont une cambrure variable en fonction de l'écoulement 88. Ceci peut être obtenu en réalisant les pales 26 au moins en partie en un matériau possédant une certaine flexibilité, par exemple un élastomère ou un matériau composite de type fibre de verre/carbone et résine.

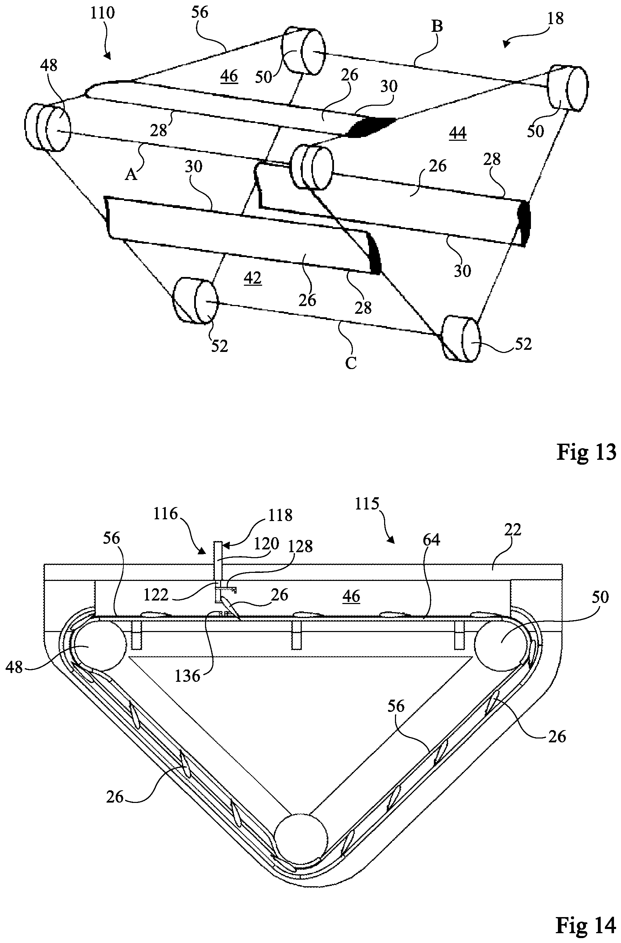

La figure 13 est une vue analogue à la figure 7 d'un mode de réalisation d'une hydrolienne 110 comprenant tous les éléments de l'hydrolienne 10 à la différence que les pales 26 sont à cambrure variable. Sous l'action de l'écoulement 88, les pales 26 adoptent une cambrure dans la zone de parcours amont 42 qui augmente leur portance par rapport à un profil de cambrure nulle. Dans la zone de parcours amont 42, la cambrure des pales 26 est orientée vers l'aval. En outre, les pales 26 adoptent une cambrure dans la zone de parcours aval 44 qui augmente leur portance par rapport à un profil de cambrure nulle. Dans la zone de parcours aval 44, la cambrure des pales 26 est orientée vers l'aval. De préférence, dans la zone de parcours supérieure 46, les pales 26 ont une cambrure sensiblement nulle de façon à réduire les pertes de puissance par force de trainée lorsqu'elles sont immergées. L'introduction d'une cambrure permet d'augmenter la finesse des pales 26 dans les zones de parcours amont 42 et aval 44 et donc d'augmenter le rendement de l'hydrolienne 110 par rapport à l'hydrolienne 10.

La figure 14 est une vue analogue à la figure 7 d'un mode de réalisation d'une hydrolienne 115 comprenant tous les éléments de l'hydrolienne 10 et comprenant en outre un système de débrayage et d'embrayage 116 des pales 26, représenté partiellement en figure 14.

Pour chaque pale 26, le système de débrayage et d'embrayage 116 permet de désolidariser la pale 26 des chaînes 56. Selon un mode de réalisation, le système de débrayage et d'embrayage 116 est configuré pour désolidariser indépendamment chaque pale 26 des chaînes 56 lorsque la pale 26 est dans la zone de parcours supérieure 46. En figure 14, on a représenté une seule pale 26 qui est en position débrayée.

La possibilité de débrayer indépendamment chaque pale 26 permet de réaliser des opérations de maintenance sur la pale 26 sans devoir sortir l'hydrolienne 115 hors du cours d'eau dans lequel elle est installée. Ceci permet également de protéger les pales 26 en présence de corps flottants.

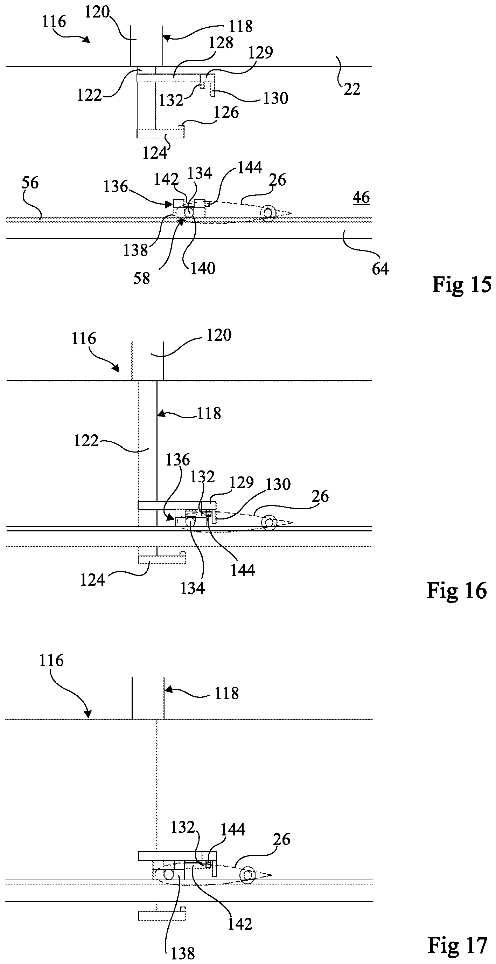

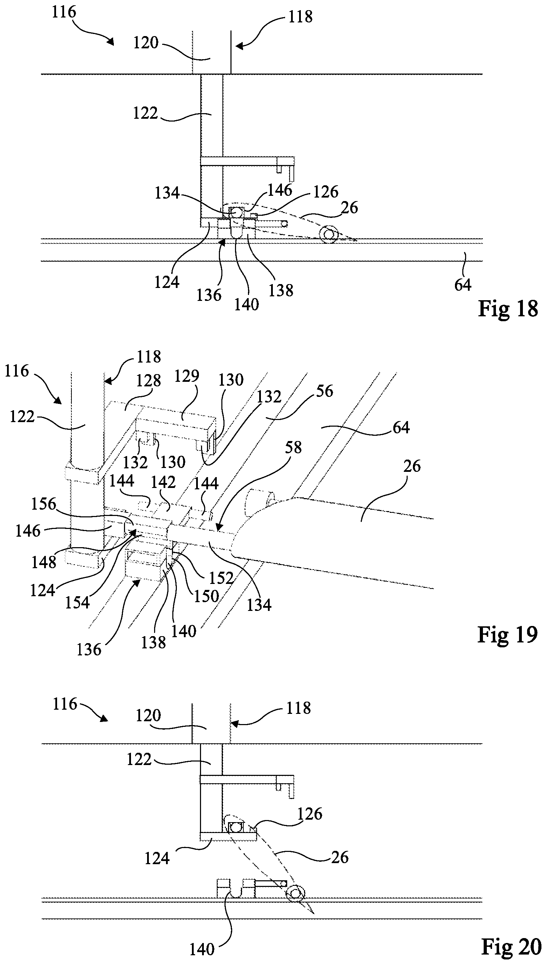

Les figures 15 à 18 et 20 sont des vues en coupe, partielles et schématiques, d'une partie de l'hydrolienne 115 de la figure 14 à des étapes successives d'une opération de débrayage d'une pale 26 et la figure 19 est une vue en perspective de la partie de l'hydrolienne représentée en figure 18. Sur les figures 15 à 18 et 20, la pale 26 est représentée en traits pointillés.

Pour chaque pale 26 et chaque chaîne 56, le système de débrayage et d'embrayage 116 comprend un vérin 118 comprenant un corps 120 et une tige 122 configurée pour coulisser plus ou moins dans le corps 120. Le corps 120 est fixé au bâti 22 de l'hydrolienne 115. Le vérin 118 peut être un vérin électrique ou un vérin hydraulique. Le vérin 118 comprend un bras inférieur 124 fixé à l'extrémité de la tige 122 opposée au corps 120. Le bras inférieur 124 s'étend sensiblement perpendiculairement par rapport à l'axe de la tige 122. Un pion 126 se projette depuis l'extrémité du bras 124 opposée à la tige 122 et est orienté vers le haut. Le vérin 118 comprend un premier bras supérieur 128 fixé à la tige 122, entre le corps 120 et le bras inférieur 124. Le premier bras supérieur 128 s'étend sensiblement perpendiculairement par rapport à l'axe de la tige 122, de préférence parallèlement au bras inférieur 124 et du même côté que le bras inférieur 124. Le premier bras supérieur 128 se prolonge à son extrémité opposée à la tige 122 par un deuxième bras supérieur 129 qui s'étend sensiblement perpendiculairement par rapport au premier bras supérieur 128 du côté de la pale 26. A chaque extrémité axiale du deuxième bras supérieur 129, un pion 130 se projette depuis le bord arrière du deuxième bras supérieur 129 et est orienté vers le bas. A chaque extrémité axiale du deuxième bras supérieur 129, un autre pion 132 se projette depuis le bord avant du deuxième bras supérieur 129 et est orienté vers le bas. La longueur de chaque pion 130 est supérieure à la longueur de chaque pion 132.

Dans le présent mode de réalisation, pour chaque pale 26 et chaque chaîne 56, l'élément de liaison 58 de la pale 26 à la chaîne 56 comprend un arbre 134 qui s'étend latéralement d'un côté de la pale 26 et un élément de verrouillage 136 de l'arbre 134 à la chaîne 56. L'élément de verrouillage 136 comprend un support 138 solidaire de la chaîne 56. Le support 138 comprend un logement 140 recevant l'arbre 134 en position embrayée et comprend un couvercle 142 mobile par rapport au support 138 entre une position verrouillée dans laquelle le couvercle 142 recouvre le logement 140 et une position déverrouillée dans laquelle le couvercle 142 ne recouvre pas le logement 140. Le couvercle 142 est actionnable entre les positions verrouillée et déverrouillée par l'intermédiaire de deux ergots 144. Comme cela apparaît plus nettement en figure 19, l'arbre 134 comprend une portion d'extrémité 146 dont la section droite est carrée et qui se prolonge, du côté de la pale 26, par une portion intermédiaire 148 dont la forme est au moins en partie complémentaire de celle du logement 140. A titre d'exemple, dans le présent mode de réalisation, le logement 140 comprend un fond 150 formant une cuvette hémicylindrique se prolongeant par des parois latérales 152 sensiblement planes et parallèles et la portion intermédiaire 148 comprend une portion bombée hémicylindrique 154 orientée vers le bas se prolongeant par deux parois planes 156 sensiblement parallèles.

Le système de débrayage et d'embrayage 116 comprend en outre un moteur, non représenté, adapté à entraîner en rotation au moins l'une des roues 48, 50 dans l'un ou l'autre sens de rotation lors d'une opération de débrayage de façon à pouvoir déplacer les pales 26 de façon contrôlée.

En fonctionnement normal de l'hydrolienne, les tiges 122 des vérins 138 sont suffisamment rentrées dans les corps 120 pour que les vérins 138 ne gênent pas le mouvement des pales 126. En outre, pour chaque élément de verrouillage 136, le couvercle 142 est en position fermée, empêchant ainsi le déplacement de l'arbre 134 hors du logement 140. L'arbre 134 est alors solidaire de la chaîne 56 par la coopération de la portion intermédiaire 148 avec le logement 140 de l'élément de verrouillage 136.

Une opération de débrayage d'une pale 26 comprend les étapes suivantes :

la pale 26 à débrayer est déplacée jusqu'à la zone de parcours supérieure 46 sensiblement à l'aplomb du vérin 118 qui lui est associé (figure 15) ;
le vérin 118 est actionné pour faire coulisser la tige 122 par rapport au corps 120 de façon à rapprocher le deuxième bras supérieur 129 de l'élément de verrouillage 136 jusqu'à ce que chaque ergot 144 s'insère entre les pions 130, 132, la longueur du bras inférieur 124 étant adaptée pour ne pas coopérer avec l'arbre 134 lors de ce déplacement (figure 16) ;
la pale 26 à débrayer est alors déplacée vers l'avant sur une courte distance (figure 17) tandis que le vérin 118 reste immobile. Ceci entraîne l'ouverture du couvercle 142 par rapport au support 138 en raison de la coopération des ergots 144 avec les pions 132 ; et
le vérin 118 est actionné pour faire coulisser la tige 122 par rapport au corps 120 de façon à éloigner le bras inférieur 124 du support 138 de l'élément de verrouillage 136 (figures 18, 19 et 20), le bras inférieur 124 soulevant la portion d'extrémité 146 de l'arbre 134 et par conséquent la pale 26. Le pion 126 empêche que la portion d'extrémité 146 de l'arbre 134 ne glisse vers l'arrière et ne s'échappe du bras inférieur 124. Les figures 18 et 19 représentent la pale 26 au cours du soulèvement alors que l'arbre 134 vient de sortir du logement 140 et la figure 20 représente la pale 26 à la fin du mouvement de soulèvement, la pale 26 étant alors en position débrayée. La pale 26 peut alors être retirée si besoin.

Les figures 20 à 23 sont des vues en coupe, partielles et schématiques, d'une partie de l'hydrolienne 115 de la figure 14 à des étapes successives d'une opération d'embrayage d'une pale 26 débrayée. Une opération d'embrayage d'une pale 26 en position débrayée comprend les étapes suivantes :

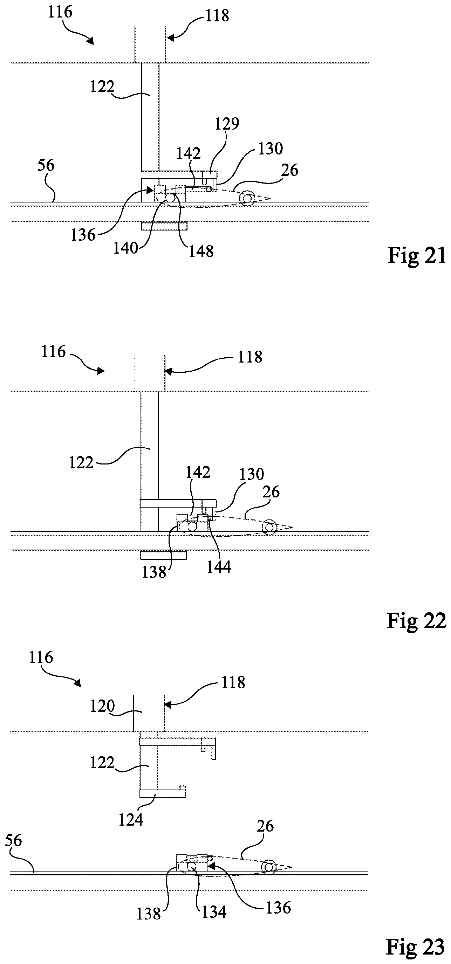

la chaîne 56 est actionnée pour amener l'élément de verrouillage 136 associé à la pale 26 à l'aplomb de celle-ci (figure 20), le couvercle 142 de l'élément de verrouillage 136 étant en position ouverte ;
le vérin 118 est actionné pour faire coulisser la tige 122 par rapport au corps 120 de façon à rapprocher le deuxième bras supérieur 129 de l'élément de verrouillage 136 jusqu'à ce que la portion intermédiaire 148 de l'arbre 134 pénètre dans le logement 140 et que les ergots 144 se trouvent en vis-à-vis des pions 130, 132 (figure 21) ;
la pale 26 à débrayer est alors déplacée vers l'arrière sur une courte distance (figure 22) tandis que le vérin 118 reste immobile. Ceci entraîne la fermeture du couvercle 142 par rapport au support 138 en raison de la coopération des ergots 144 avec les pions 130 ; et
le vérin 118 est actionné pour faire coulisser la tige 122 par rapport au corps 120 de façon à éloigner le bras inférieur 124 du support 138 de l'élément de verrouillage 136 (figure 23), la longueur du bras inférieur 124 étant adaptée pour ne pas coopérer avec l'arbre 134 lors de ce déplacement. La pale 26 est alors à nouveau reliée à la chaîne 56.

En position débrayée, la corde de la pale 26 forme avec un axe vertical un angle inférieur à 45°. L'encombrement selon une direction horizontale de la pale 26 en position débrayée est donc inférieur à l'encombrement de la pale 26 lorsqu'elle est reliée à la chaîne 56.

Au moins deux pales 26 peuvent être amenées successivement en position débrayée. De préférence, toutes les pales 26 de l'hydrolienne 115 peuvent être amenées successivement en position débrayée.

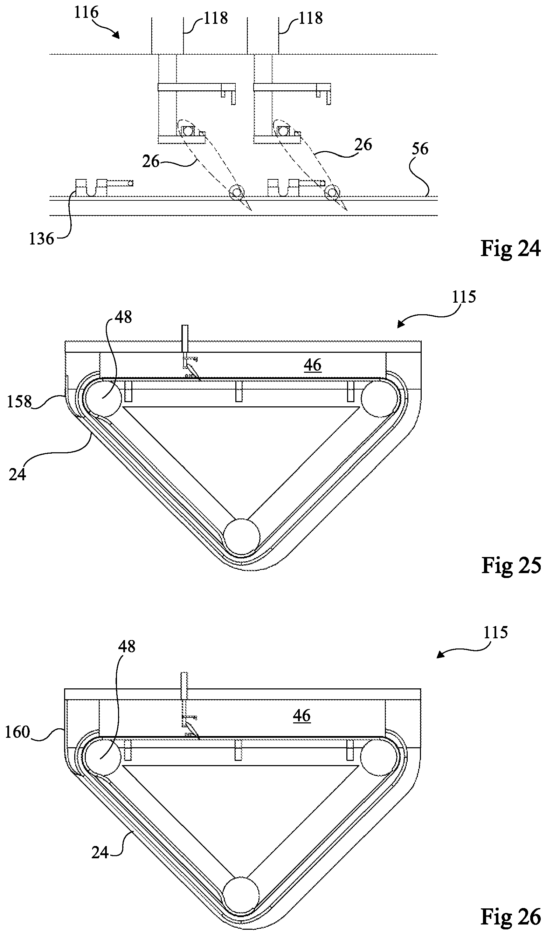

La figure 24 est une vue en coupe, partielle et schématique, représentant deux pales 26 en position débrayée. Sur cette figure, la pale 26 de gauche a été débrayée la première. La chaîne 56 a été actionnée pour amener la pale 26 de droite jusqu'à l'aplomb du vérin 118 qui lui est associé, ce qui a entraîné un déplacement vers la gauche de l'élément de verrouillage 136 associé à la pale 26 de gauche et qui reste solidaire de la chaîne 56.

Il est souhaitable que l'opération de débrayage d'une pale 26 puisse être réalisée alors que l'hydrolienne 115 demeure dans le cours d'eau. Il peut être souhaitable que la pale 26 à débrayer et le vérin 118 soient protégés contre le courant lors de l'opération de débrayage. De préférence, les corps 120 des vérins 118 sont situés en permanence hors de l'eau.

La figure 25 est une vue analogue à la figure 14 d'une variante de l'hydrolienne 115 dans le cas où la zone de parcours supérieure 46 est située sensiblement hors de l'eau. L'hydrolienne 115 comprend un déflecteur 158 fixé aux supports 24 en amont des roues supérieures avant 48 au niveau de la zone immergée de l'hydrolienne 115.

La figure 26 est une vue analogue à la figure 14 d'une variante de l'hydrolienne 115 dans le cas où la zone de parcours supérieure 46 est sensiblement immergée en fonctionnement. L'hydrolienne 115 comprend un déflecteur 160 fixé aux supports 24 en amont des roues supérieures avant 48 au niveau de la zone immergée de l'hydrolienne 115. La dimension verticale du déflecteur 160 est supérieure à la dimension verticale du déflecteur 158.

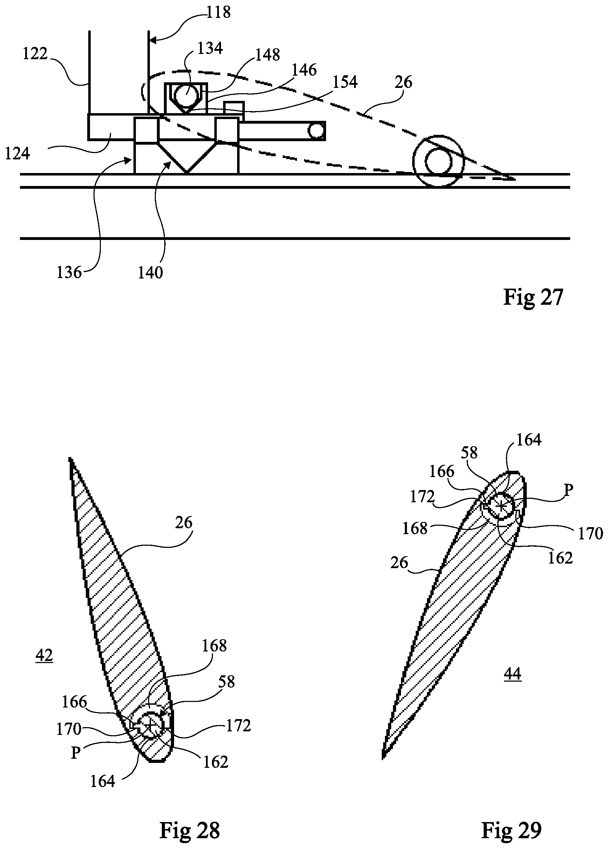

La figure 27 est une vue en coupe, partielle et schématique, d'une variante de réalisation du système de débrayage et d'embrayage de l'hydrolienne de la figure 14. Selon cette variante, le logement 140 et la portion intermédiaire 148 de l'arbre 134 ont des formes qui facilitent le centrage automatique de la portion intermédiaire 148 par rapport à l'élément de verrouillage 136 lors de l'embrayage de la pale 26. A titre d'exemple, le logement 140 prend une forme en "V" et la portion bombée 154 de la portion intermédiaire 148 prend également une forme en "V". De ce fait, lorsque la portion intermédiaire est descendue dans le logement 140 par le vérin 118, même si elle ne se trouve pas parfaitement à l'aplomb du logement 140, les parois de la portion en "V" 154 vont coopérer avec les parois du logement 140 pour déplacer horizontalement l'arbre 134 et amener la portion en "V" 154 au fond du logement 140.

Des modes de réalisation du système de débrayage et d'embrayage ont été décrits pour des hydroliennes comprenant des guides 60, 62, 64, 66, 68, 70, 72, 74, 76, 78 qui coopèrent avec les éléments d'appui 80 prévus en partie arrière de chaque pale 26. Toutefois, ces modes de réalisation du système de débrayage et d'embrayage peuvent être mis en oeuvre avec d'autres dispositifs de guidage des pales 26 qui assurent le maintien de l'inclinaison de chaque pale 26 par rapport aux chaînes 56 dans la zone de parcours amont 42 et la zone de parcours aval 44.

Les figures 28 et 29 sont des vues en coupe d'une pale 26 respectivement dans la zone de parcours amont 42 et dans la zone de parcours aval 44. Dans ce mode de réalisation, les éléments d'appui 80 et les guides 60, 62, 64, 66, 68, 70, 72, 74, 76, 78 ne sont pas présents. Chaque élément de liaison 58 comprend une portion cylindrique 162 d'axe P qui s'étend dans un logement cylindrique 164 de la pale 26 permettant le pivotement de la pale 26 autour de l'axe P. L'élément de liaison 58 comprend en outre un ergot 166 qui se projette vers l'extérieur depuis la portion cylindrique 164. Le logement 164 se prolonge par une gorge 168 contenant l'ergot. La gorge 168 s'étend selon un arc de cercle sous-tendant un angle sensiblement égal au débattement angulaire souhaité de la pale 26. Les extrémités angulaires de la gorge 168 forment deux butées 170, 172. En figure 28, lorsque la pale 26 est dans la zone de parcours amont 42, la pale 26 sous l'action du courant pivote par rapport à l'élément de liaison 58 jusqu'à ce que l'ergot 166 vienne au contact de la butée 170, ce qui fixe l'inclinaison de la pale 26 par rapport à la chaîne 56 dans la zone de parcours amont 42. En figure 29, lorsque la pale 26 est dans la zone de parcours aval 44, la pale 26 sous l'action du courant pivote par rapport à l'élément de liaison 58 jusqu'à ce que l'ergot 166 vienne au contact de la butée 172, ce qui fixe l'inclinaison de la pale 26 par rapport à la chaîne 56 dans la zone de parcours amont 144.

Des modes de réalisation particuliers ont été décrits. Diverses variantes et modifications apparaissent à l'homme de l'art. En particulier, bien que dans des modes de réalisation décrits précédemment, l'hydrolienne ne comprend qu'une seule roue inférieure 52, l'hydrolienne peut comprendre au moins deux roues inférieures, par exemple une roue inférieure amont et une roue inférieure aval. La zone de parcours amont s'étend alors entre la roue supérieure avant et la roue inférieure amont et la zone de parcours aval s'étend entre la roue inférieure aval et la roue supérieure aval. L'hydrolienne comprend, en outre, une zone de parcours inférieure entre la roue inférieure amont et la roue inférieure aval.

En outre, il est possible d'associer plusieurs hydroliennes telles que décrites précédemment, par exemple en plaçant les hydroliennes selon une ligne perpendiculaire au courant, les hydroliennes étant fixées les unes aux autres, par exemple par l'intermédiaire des flotteurs 20 et/ou des supports 24 de façon à réduire, voire supprimer, les passages de courant entre deux hydroliennes adjacentes.

Divers modes de réalisation avec diverses variantes ont été décrits ci-dessus. On note que l'homme de l'art peut combiner divers éléments de ces divers modes de réalisation et variantes sans faire preuve d'activité inventive.

**Revendications**

1. Centrale hydroélectrique pour cours d'eau (88) comprenant un convertisseur électromécanique (16) et une turbine (18) adaptée à entraîner le convertisseur électromécanique, la turbine comprenant deux supports (24) verticaux et parallèles à l'écoulement du cours d'eau, un flotteur (20) relié à chaque support, et, entre les supports (24), des pales (26) motrices mues par les forces hydrodynamiques de portance, liées à chaque extrémité à un organe de transmission comprenant une chaîne (56) ou une courroie formant une boucle fermée, la turbine comprenant en outre des roues (48, 50, 52) entraînées par l'organe de transmission et montées sur les supports, chaque pale (26) comprenant un bord d'attaque (28) et un bord de fuite (30), la centrale hydroélectrique comprenant au moins des première, deuxième et troisième zones de parcours (42, 44, 46) dans lesquelles chaque organe de transmission (56) s'étend de façon rectiligne, les bords d'attaque (28) des pales (26) étant disposés de façon horizontale à 5° près au moins dans les première et deuxième zones de parcours (42, 44), les pales étant complètement immergées au moins sur une partie des première et deuxième zones de parcours, **caractérisée en ce que** chaque support (24) comprend des guides (60, 62, 64, 66, 68, 70, 72, 74, 76, 78) et dans laquelle chaque pale (26) comprend des éléments (80) adaptés à venir en butée contre les guides.

2.   Centrale hydroélectrique selon la revendication 1, dans laquelle chaque pale (26) est montée libre en rotation par rapport aux organes de transmission (56) autour d'un axe (P) situé dans la moitié de la pale du côté du bord d'attaque (28) de la pale.

3.   Centrale hydroélectrique selon la revendication 2, dans laquelle, pour chaque pale (26), les éléments (80) sont fixés à la pale dans la moitié de la pale du côté du bord de fuite (30) de la pale.

4.   Centrale hydroélectrique selon la revendication 3, dans laquelle les guides de chaque support (24) comprennent un premier guide rectiligne (60) dans la première zone de parcours (42), en aval, selon le sens d'écoulement du cours d'eau, de l'organe de transmission (56) dans la première zone de parcours et un deuxième guide rectiligne (62) dans la deuxième zone de parcours (44), en aval, selon le sens d'écoulement du cours d'eau, de l'organe de transmission (56) dans la deuxième zone de parcours.

5.   Centrale hydroélectrique selon l'une quelconque des revendications 1 à 4, comprenant en outre un système de débrayage et d'embrayage (116) d'au moins l'une des pales (26) par rapport à l'organe de transmission (56).

6.   Centrale hydroélectrique selon la revendication 5, dans laquelle le système de débrayage et d'embrayage (116) comprend un élément de verrouillage (136) solidaire de l'organe de transmission (56) et comprenant un logement (140), la pale (26) se prolongeant par un arbre (134) dont une portion (146) est située, dans une position embrayée, dans le logement, le système de débrayage et d'embrayage comprenant en outre un vérin (118) configuré pour déplacer l'arbre de la position embrayée à une position débrayée dans laquelle l'arbre est à l'extérieur du logement et pour déplacer l'arbre de la position débrayée à la position embrayée.

7.   Centrale hydroélectrique selon la revendication 5 ou 6, dans laquelle le système de débrayage et d'embrayage (116) est configuré pour débrayer successivement chaque pale (26) par rapport à l'organe de transmission (56) dans un premier ordre et pour embrayer successivement chaque pale (26) dans un deuxième ordre inverse du premier ordre.

8.   Centrale hydroélectrique selon l'une quelconque des revendications 1 à 7, dans laquelle, dans un plan vertical parallèle aux supports (24), le bord d'attaque de chaque pale (26) est adapté à se déplacer de façon rectiligne dans chacune des première, deuxième et troisième zones de parcours (42, 44, 46).

9.   Centrale hydroélectrique selon l'une quelconque des revendications 1 à 8, dans laquelle les pales (26) sont émergées en totalité dans la troisième zone de parcours (46).

10.   Centrale hydroélectrique selon la revendication 9, dans laquelle les pales (26) se déplacent sensiblement horizontalement à 5° près dans la troisième zone de parcours (46).

11.   Centrale hydroélectrique selon l'une quelconque des revendications 1 à 10, dans laquelle les pales (26) sont adaptées, sous l'action des forces hydrodynamiques, à se cambrer vers l'aval dans les première et deuxième zones de parcours (42, 44).

12.   Centrale hydroélectrique selon l'une quelconque des revendications 1 à 11, dans laquelle, pour chaque pale (26) et pour chaque organe de transmission (56), la pale est montée libre en rotation autour d'un axe (P) par rapport à un élément de liaison (58) fixé à l'organe de transmission entre une première inclinaison relative entre la pale et l'élément de liaison et une deuxième inclinaison relative entre la pale et l'élément de liaison, la pale et/ou l'élément de liaison comprenant des butées (166, 170, 172) configurées pour bloquer la rotation de la pale par rapport à l'élément de liaison dans un premier sens de rotation autour dudit axe à la première inclinaison et dans un deuxième sens de rotation autour dudit axe, opposé au premier sens de rotation, à la deuxième inclinaison.

**Patentansprüche**

1. Wasserkraftwerk für einen Wasserstrom (88) mit einem elektromechanischen Wandler (16) und einer Turbine (18), die in der Lage ist, den elektromechanischen Wandler anzutreiben, wobei die Turbine zwei vertikale Träger (24) parallel zur Strömung des Wasserstroms, einen Schwimmer (20), der mit jedem Träger verbunden ist, und zwischen den Trägern (24) Antriebsschaufeln (26) aufweist, die durch hydrodynamische Auftriebskräfte bewegt werden und an jedem Ende mit einem Übertragungselement verbunden sind, das eine Kette (56) oder einen Riemen aufweist, die bzw. der eine geschlossene Schleife bildet, wobei die Turbine außerdem Räder (48, 50, 52) aufweist, die durch das Übertragungselement angetrieben werden und auf den Trägern montiert sind, wobei jede Schaufel (26) eine Vorderkante (28) und eine Hinterkante (30) aufweist, wobei das Wasserkraftwerk mindestens einen ersten, zweiten und dritten Verlaufsbereich (42, 44, 46) aufweist, in denen sich jedes Übertragungselement (56) geradlinig erstreckt, wobei die Vorderkanten (28) der Schaufeln (26) zumindest in dem ersten und zweiten Verlaufsbereich (42, 44) horizontal plus oder minus 5° angeordnet sind, wobei die Schaufeln zumindest über einen Teil des ersten und zweiten Verlaufsbereichs vollständig untergetaucht sind, **dadurch gekennzeichnet, dass** jeder Träger (24) Führungen (60, 62, 64, 66, 68, 70, 72, 74, 76, 78) aufweist und wobei jede Schaufel (26) Elemente (80) aufweist, die in der Lage sind, gegen die Führungen zu stoßen.

2. Wasserkraftwerk nach Anspruch 1, wobei jede Schaufel (26) frei zur Drehung bezüglich der Übertragungselemente (56) angebracht ist, und zwar um eine Achse (P), die sich in der Mitte der Schaufel auf der Seite der Vorderkante (28) der Schaufel befindet.

3. Wasserkraftwerk nach Anspruch 2, wobei für jede Schaufel (26) die Elemente (80) an der Schaufel in der Mitte der Schaufel auf der Seite der Hinterkante (30) befestigt sind.

4. Wasserkraftwerk nach Anspruch 3, wobei die Führungen jedes Trägers (24) eine erste geradlinige Führung (60) in dem ersten Verlaufsbereich (42) des Übertragungselements (56) stromabwärts entsprechend der Strömungsrichtung des Wasserstroms und eine zweite geradlinige Führung (62) in dem zweiten Verlaufsbereich (44) des Übertragungselements (56) stromabwärts entsprechend der Strömungsrichtung des Wasserstroms aufweisen.

5. Wasserkraftwerk nach einem der Ansprüche 1 bis 4, das ferner ein System zum Auskuppeln und Einkuppeln (116) mindestens einer der Schaufeln (26) in Bezug auf das Übertragungselement (56) aufweist.

6. Wasserkraftwerk nach Anspruch 5, wobei das System zum Auskuppeln und Einkuppeln (116) ein Verriegelungselement (136) umfasst, das fest mit dem Übertragungselement (56) verbunden ist und einen Lagersitz (140) aufweist, wobei die Schaufel (26) durch eine Welle (134) fortgesetzt wird, die einen Abschnitt (146) aufweist, der sich in einer eingekuppelten Position in dem Lagersitz befindet, wobei das System zum Auskuppeln und Einkuppeln ferner einen Zylinder (118) umfasst, der so konfiguriert ist, dass er die Welle aus der eingekuppelten Position in eine ausgekuppelte Position verschiebt, in der sich die Welle außerhalb des Lagersitzes befindet, und dass er die Welle aus der ausgekuppelten Position in die eingekuppelte Position verschiebt.

7. Wasserkraftwerk nach Anspruch 5 oder 6, wobei das System zum Auskuppeln und Einkuppeln (116) so konfiguriert ist, dass es nacheinander jede Schaufel (26) in Bezug auf das Übertragungselement (56) in einer ersten Reihenfolge auskuppelt und nacheinander jede Schaufel (26) in einer zweiten Reihenfolge entgegengesetzt zur ersten Reihenfolge einkuppelt.

8. Wasserkraftwerk nach einem der Ansprüche 1 bis 7, wobei in einer vertikalen Ebene parallel zu den Trägern (24) die Vorderkante jeder Schaufel (26) in der Lage ist, sich geradlinig in jedem der ersten, zweiten und dritten Verlaufsbereiche (42, 44, 46) zu verschieben.

9. Wasserkraftwerk eines der Ansprüche 1 bis 8, wobei die Schaufeln (26) im dritten Verlaufsbereich (46) vollständig herausgehoben sind.

10. Wasserkraftwerk nach Anspruch 9, wobei sich die Schaufeln (26) im dritten Verlaufsbereich (46) im Wesentlichen horizontal um plus oder minus 5° verschieben.

**11.** Wasserkraftwerk nach einem der Ansprüche 1 bis 10, wobei die Schaufeln (26) unter der Einwirkung hydrodynamischer Kräfte in der Lage sind, sich im ersten und zweiten Verlaufsbereich (42, 44) in stromabwärtiger Richtung zu wölben.

**12.** Wasserkraftwerk nach einem der Ansprüche 1 bis 11, wobei für jede Schaufel (26) und für jedes Übertragungselement (56) die Schaufel frei drehbar um eine Achse (P) in Bezug auf ein an dem Übertragungselement befestigtes Verbindungselement (58) zwischen einer ersten relativen Neigung zwischen der Schaufel und dem Verbindungselement und einer zweiten relativen Neigung zwischen der Schaufel und dem Verbindungselement angebracht ist, wobei die Schaufel und/oder das Verbindungselement Anschläge (166, 170, 172) umfasst, die so konfiguriert sind, dass sie die Drehung der Schaufel in Bezug auf das Verbindungselement in einer ersten Drehrichtung um die Achse mit der ersten Neigung und in einer zweiten Drehrichtung, die der ersten Drehrichtung entgegengesetzt ist, um die Achse mit der zweiten Neigung blockieren.

**Claims**

1. A hydroelectric power plant for a water stream (88) comprising an electromechanical converter (16) and a turbine (18) capable of driving the electromechanical converter, the turbine comprising two vertical supports (24) parallel to the stream flow, a float (20) connected to each support and, between the supports (24), driving blades (26) moved by hydrodynamic lift forces, connected at each end to a drive component comprising a chain (56) or a belt forming a closed loop, the turbine further comprising wheels (48, 50, 52) driven by the drive component and assembled on the supports, each blade (26) comprising a leading edge (28) and a trailing edge (30), the hydroelectric power plant comprising at least first, second, and third travel areas (42, 44, 46) where each drive component (56) extends rectilinearly, the leading edges (28) of the blades (26) being arranged horizontally plus or minus 5° at least in the first and second travel areas (42, 44), the blades being fully submerged at least over a portion of the first and second travel areas, **characterized in that** each support (24) comprises guides (60, 62, 64, 66, 68, 70, 72, 74, 76, 78) and wherein each blade (26) comprises elements (80) capable of abutting against the guides.

2. The hydroelectric power plant of claim 1, wherein each blade (26) is assembled to freely rotate with respect to the drive components (56) around an axis (P) located in the blade half on the side of the leading edge (28) of the blade.

3. The hydroelectric power plant of claim 2, wherein, for each blade (26), the elements (80) are secured to the blade in the blade half on the side of the trailing edge (30) of the blade.

4. The hydroelectric power plant of claim 3, wherein the guides of each support (24) comprise a first rectilinear guide (60) in the first travel area (42), downstream, according to the stream flow direction, of the drive component (56) in the first travel area, and a second rectilinear guide (62) in the second travel area (44), downstream, according to the water stream flow direction, of the drive component (56) in the second travel area.

5. The hydroelectric power plant of any of claims 1 to 4, further comprising a system for disengaging and engaging (116) at least one of the blades (26) with respect to the drive component (56).

6. The hydroelectric power plant of claim 5, wherein the disengaging and engaging system (116) comprises a locking element (136) firmly attached to the drive component (56) and comprising a housing (140), the blade (26) being continued by a shaft (134) having a portion (146) located, in an engaged position, in the housing, the disengaging and engaging system further comprising a jack (118) configured to displace the shaft from the engaged position to a disengaged position where the shaft is outside of the housing and to displace the shaft from the disengaged position to the engaged position.

7. The hydroelectric power plant of claim 5 or 6, wherein the disengaging and engaging system (116) is configured to successively disengage each blade (26) with respect to the drive component (56) in a first order and to successively engage each blade (26) in a second order opposite to the first order.

8. The hydroelectric power plant of any of claims 1 to 7, wherein, in a vertical plane parallel to the supports (24), the leading edge of each blade (26) is capable of displacing rectilinearly in each of the first, second, and third travel areas (42, 44, 46).

9. The hydroelectric power plant of any of claims 1 to 8, wherein the blades (26) are totally emerged in the third travel area (46) .

10. The hydroelectric power plant of claim 9, wherein the blades (26) displace substantially horizontally plus or minus 5° in the third travel area (46).

11. The hydroelectric power plant of any of claims 1 to 10, wherein the blades (26) are capable, under the action of hydrodynamic forces, of cambering in the downstream direction in the first and second travel areas (42, 44).

12. The hydroelectric power plant of any of claims 1 to 11, wherein, for each blade (26) and for each drive component (56), the blade is assembled to freely rotate around an axis (P) with respect to a connection element (58) secured to the drive component between a first relative inclination between the blade and the connection element and a second relative inclination between the blade and the connection element, the blade and/or the connection element comprising stops (166, 170, 172) configured to block the rotation of the blade with respect to the connection element in a first rotation direction around said axis with the first inclination and in a second rotation direction around said axis, opposite to the first rotation direction, with the second inclination.

Fig 1

Fig 2

Fig 3

Fig 4

Fig 5

Fig 6

Fig 7

Fig 8

Fig 9

Fig 10

Fig 11

Fig 12

Fig 13

Fig 14

Fig 15

Fig 16

Fig 17

Fig 18

Fig 19

Fig 20

**Fig 21**

**Fig 22**

**Fig 23**

**Fig 24**

**Fig 25**

**Fig 26**

**Fig 27**

**Fig 28**

**Fig 29**

**EP 3 652 429 B1**

**RÉFÉRENCES CITÉES DANS LA DESCRIPTION**

**Documents brevets cités dans la description**

- US 1522820 A